# EUROPEAN PATENT APPLICATION

(11) **EP 2 945 337 A2**
(43) Date of publication of application: **18.11.2015**
(21) Application number: 13786978.0
(22) Date of filing: 22.07.2013
(51) Int. Cl.: H04L 29/06

(54) **METHOD, SYSTEM AND SERVER FOR SERVICE SWITCHING**

(30) Priority: 10.01.2013 CN 201310010153
(71) Applicant: ZTE Corporation, Shenzhen, Guangdong 518057 (CN)
(72) Inventor: FENG, Dejuan, Shenzhen Guangdong 518057 (CN); CHEN, Hui, Shenzhen Guangdong 518057 (CN); LIANG, Guohe, Shenzhen Guangdong 518057 (CN)
(74) Representative: Tischner, Oliver
(86) International application number: PCT/CN2013/079775
(87) International publication number: WO 2013/167064

(57) **Abstract**

Disclosed are a service switching method, system and server, and the method includes: service switching is implemented when a server determines that a service switching strategy is met according to switching information required for the service switching stored in the server or pooled in and reported by a service switching request. The system includes a server configured to implement service switching when determining that a service switching strategy is met according to switching information required for the service switching stored in the server or pooled in and reported by a service switching request. By means of the disclosure, the necessary switching information required for the service switching can be passed by a determined target terminal.

## Description

### TECHNICAL FIELD

The present disclosure relates to service switching techniques, and in particular to a service switching method, system and server in a multi-terminal scenario.

### BACKGROUD

With the globally large scale commercial usage of 3G and the rapid improvement of mobile communication bandwidth, the Internet and telecommunication networks are merging gradually, and a mobile Internet is coming true.

Compared to the traditional Internet, the mobile Internet is characterized in the abundance and diversity of terminals. Terminals of the mobile Internet include not only traditional PCs, laptops, mobile phones originated from a mobile communication system, and Internet notebooks, tablet computers, Internet boxes that arise in recent years, but also include new PSPs, TVs and MP4 players that arise after new techniques are merged.

When a user based on the mobile Internet uses a service, he/she has a wide range of devices to be selected, and there is a multi-terminal scenario, a same service can be used on a PC or on a laptop or even on a mobile phone, a tablet computer or a TV. Further, when the user uses a service, he/she wants to switch the service between different terminals on the premise of ensuring continuity of the service, i.e., the service will not be interrupted during the switching so as to ensure continuity of the service. The user particularly wishes not to make the switching complicated or not to reduce convenience of user operations due to lacking of necessary terminal information and network information when a service of the terminal is switched in different network environments.

In order to ensure service continuity when the user switches a service, a problem required to be solved is to identify quickly a target terminal to which the service is switched and to transmit necessary switching information. This problem has been found to be particularly apparent when the service is implemented cooperatively by multiple terminals, for example, in a home environment when there are multiple TVs, PCs and mobile phones, it is not easy for a user to perform service switching between multiple terminals or perform service cooperation. Therefore, in a multi-terminal scenario, particularly a scenario where a service is implemented cooperatively by multiple terminals, in order to ensure service not to be interrupted when the service is switched between different terminals, thus ensuring the service continuity and lowering the complexity of the switching process, how to deliver necessary switching information required by the service switching through a determined target terminal is a problem that has yet to be solved.

### SUMMARY

In view of the above, embodiments of the disclosure are intended to provide a service switching method, system and server that can deliver necessary switching information required by the service switching through a determined target terminal.

To this end, the technical solutions of embodiments of the disclosure are implemented as follows.

A service switching method, including: service switching is implemented when a server determines that a service switching strategy is met according to switching information required for the service switching stored in the server or pooled in and reported by a service switching request.

In an embodiment, the service switching request may be initiated by a target terminal to the server, and the switching information may be carried in the service switching request;
the switching information may include at least terminal capability information of the target terminal and/or a current terminal, and it may further include at least one of service security authentication information, and service data link information between the current terminal and the target terminal.

In an embodiment, the terminal capability information of the target terminal and/or the current terminal may include at least: description information of software capability of the terminal, description information of hardware capability of the terminal, a current resource utilization condition of the terminal;
the terminal capability information of the current terminal may be firstly transmitted to the target terminal through near field communication, and then reported to the server by the target terminal via the service switching request; or the terminal capability information of the current terminal may be acquired by the server from information stored in the server according to a terminal ID and a service ID.

In an embodiment, the step that service switching is implemented when a server determines that a service switching strategy is met may include:
when it is determined, according to the terminal capability information of the target terminal and/or the current terminal, that requirements on capability of service switching for the terminal are met, the server notifies the target terminal to perform the service switching; or
when identification and service authentication performed based on the service security authentication information are passed, the server notifies the target terminal to implement the service switching; or
when it is determined, according to the service data link information between the current terminal and the target terminal, that multi-terminal service collaboration is supported, the server notifies the target terminal to implement the service switching.

In an embodiment, the method may further include:
the service is run on the current terminal during implementation of the service switching; and
after the target terminal completes the service switching, the server notifies the current terminal to perform service switching or service releasing.

In an embodiment, the step that the server notifies the current terminal to perform service switching or service releasing may include:
if the current terminal doesn't completely exit all of its operating services, services required to be switched are switched to the target terminal for operation, and all services are operated cooperatively by the target terminal and the current terminal;
if the current terminal exits all of its operating services, all of the services operating on the current terminal are released and released services are switched to the target terminal for operation.

A service switching system, including a server and at least two terminal devices, wherein the terminal devices include a current terminal for implementing services and a target terminal requiring services to be switched thereto;
the server is configured to implement service switching when determining that a service switching strategy is met according to switching information required for the service switching stored in the server or pooled in and reported by a service switching request;
the current terminal is configured to transmit its switching information required for the service switching to the target terminal; and
the target terminal is configured to pool its switching information required for the service switching and that acquired from the current terminal and then report pooled switching information to the server through the service switching request.

In an embodiment, the service switching request may be initiated by a target terminal to the server, and the switching information may be carried in the service switching request;
the switching information may include at least terminal capability information of the target terminal and/or a current terminal, and it may further include at least one of service security authentication information, and service data link information between the current terminal and the target terminal.

In an embodiment, the terminal capability information of the target terminal and/or the current terminal may include at least: description information of software capability of the terminal, description information of hardware capability of the terminal, a current resource utilization condition of the terminal;
the terminal capability information of the current terminal may be firstly transmitted to the target terminal through near field communication, and then reported to the server by the target terminal via the service switching request; or the terminal capability information of the current terminal may be acquired by the server from information stored in the server according to a terminal ID and a service ID.

In an embodiment, the server may be further configured to, when it is determined according to the terminal capability information of the target terminal and/or the current terminal that requirements on capability of service switching for the terminal are met, notify the target terminal to perform the service switching; or
the server may be further configured to, when identification and service authentication performed based on the service security authentication information are passed, notify the target terminal to implement the service switching; or
the server may be further configured to, when it is determined according to the service data link information between the current terminal and the target terminal that multi-terminal service collaboration is supported, notify the target terminal to implement the service switching.

A server for controlling service switching, configured to implement service switching when determining that a service switching strategy is met according to switching information required for the service switching stored in the server or pooled in and reported by a service switching request.

In an embodiment, the service switching request may be initiated by a target terminal to the server, and the switching information may be carried in the service switching request;
the switching information may include at least terminal capability information of the target terminal and/or a current terminal, and it may further include at least one of service security authentication information, and service data link information between the current terminal and the target terminal.

In an embodiment, the server may be further configured to, when it is determined according to the terminal capability information of the target terminal and/or the current terminal that requirements on capability of service switching for the terminal are met, notify the target terminal to perform the service switching; or
the server may be further configured to, when identification and service authentication performed based on the service security authentication information are passed, notify the target terminal to implement the service switching; or
the server may be further configured to, when it is determined according to the service data link information between the current terminal and the target terminal that multi-terminal service collaboration is supported, notify the target terminal to implement the service switching.

In an embodiment, the server may be further configured to, after the target terminal completes the service switching, notify the current terminal to perform service switching or service releasing.

In an embodiment, the server may be further configured to: when the current terminal doesn't completely exit all of its operating services, switch services required to be switched to the target terminal for operation, and control the target terminal and the current terminal to operate cooperatively all services; when the current terminal exits all of its operating services, control the current terminal to release all of the operating services and to switch released services to the target terminal for operation.

In the method according to embodiments of the disclosure, service switching is implemented when a server determines that a service switching strategy is met according to switching information required for the service switching stored in the server or pooled in and reported by a service switching request.

Since information of the current terminal and the target terminal can be pooled using the service switching request so that the target terminal reports pooled switching information required for the service switching to the server for processing, it is possible to implement in-time transmission of the necessary information required for the service switching. Furthermore, the service switching is implemented when the server determines that the service switching strategy is met, services operating on the current terminal will not be affected when the switching is not finished, after the switching is finished, the services are switched to the target terminal for operation or operated cooperatively by the target terminal and the current terminal, thus ensuring continuity of the services.

### BRIEF DESCRIPTION OF THE DRAWINGS

Fig. 1 is an architectural diagram of a multi-terminal service switching scenario according to an embodiment of the disclosure;
Fig. 2 is a flow chart of a method according to an embodiment of the disclosure;
Fig. 3 is an architecture of a multi-terminal service switching scenario according to a second application example of the disclosure;
Fig. 4 is an architecture of a multi-terminal service switching scenario according to a third application example of the disclosure; and
Fig. 5 is an architecture of a multi-terminal service switching scenario according to a fourth application example of the disclosure.

### DETAILED DESCRIPTION

In the embodiments of the disclosure, service switching is implemented when a server determines that a service switching strategy is met according to switching information required for the service switching stored in the server or pooled in and reported by a service switching request.

Implementation of technical solutions will be further elaborated below with reference to the drawings.

The embodiment of the disclosure is a service switching scheme in a multi-network environment, and includes the following content.

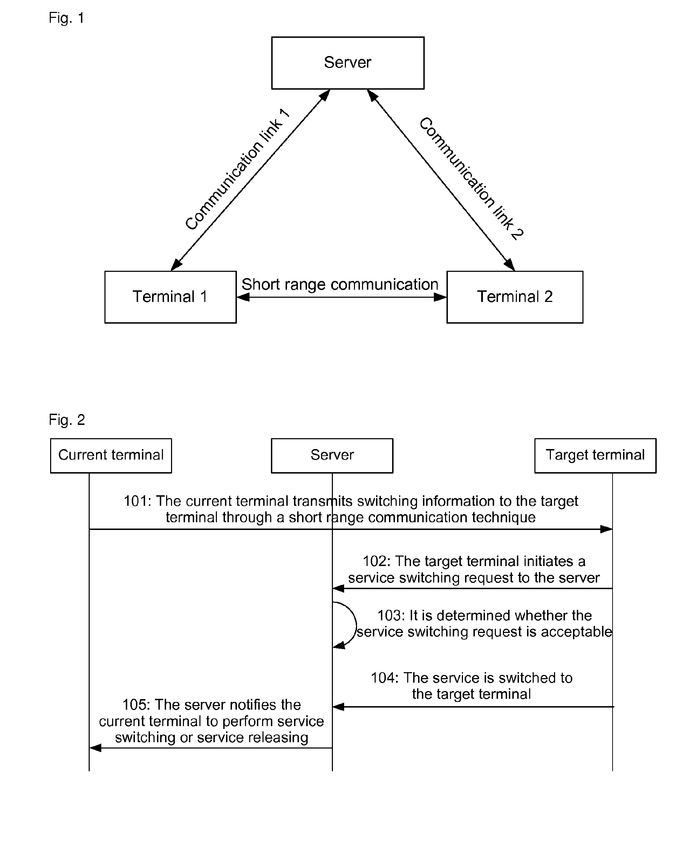

In the architecture for multi-terminal service switching scenarios according to the embodiments of the disclosure, there are three devices, i.e., a server and two terminals, and the server and the terminals communicate with each other through a communication link, as shown in Fig. 1.

In the embodiment of the disclosure, the server can be a conventional server or a virtual server based on the cloud computing technology. The terminal refers to a device having a user interface (e.g., input/output) and communication capability, it can be a mobile phone, a game console, a PC, a laptop, a TV, a music player and the like or even a server, and the terminal mainly takes responsible for direct interaction with a user and presenting services to the user.

The communication link can be based on a network of any type and/or mode so that communication between a terminal and a server can be implemented, the network may be one of the following: a point-to-point network, a broadcast network, a WAN, an LAN, a remote communication network, a data communication network, a computer network, an Asynchronous Transfer Mode (ATM) network, a Synchronous Optical Network (SONET), a Synchronous Digital Hierarchy (SDH) network, a wireless network and a wired network. Communication links corresponding to two terminals can be based on a same network or on different networks.

There are two terminals in the embodiment of the disclosure. The two terminals communicate with the server through different communication networks; the two terminals can communicate using various short range communication means such as Bluetooth, WiFi, Near Field Communication (NFC) and the like.

For simplicity and convenience, a terminal having services operated thereon is referred to as a "current terminal", which is shown as terminal 1 in Fig. 1; a terminal requiring a service to be switched thereto is referred to as a "target terminal", which is shown as terminal 2 in Fig. 1.

In the embodiment of the disclosure, according to necessary switching information required for the service switching stored in a server or reported by a service switching request and based on a determination criterion set in advance, the server determines whether the service switching request from the target terminal is acceptable.

Specifically, as shown in Fig. 2, the solution includes the following steps.

Step 101, a current terminal transmits, to a target terminal, switching information required for service switching through a short range communication technique.

Step 102, the target terminal initiates a service switching request to the server with the switching information being carried in the service switching request.

The switching information herein includes at least terminal capability information of the current terminal. Besides acquiring the terminal capability information of the current terminal from the service switching request, the server may also acquire the terminal capability information of the current terminal from information stored in the server according to a terminal ID and service ID of the current terminal.

Step 103, the server determines according to the determination criterion set in advance whether the service switching request from the target terminal is acceptable.

Step 104, when it is determined that the service switching request from the target terminal is acceptable, the service switching is established, and corresponding services are switched to the target terminal.

Step 105, after the target terminal completes the service switching, the server notifies the current terminal to perform service switching or service releasing.

Further, in the embodiment of the disclosure, the switching information required for the service switching includes terminal capability information of the target terminal and/or the current terminal.

Specifically, the terminal capability information includes: description information of software capability of the terminal, description information of hardware capability of the terminal, a current resource utilization condition of the terminal.

The terminal capability information of the current terminal can be passed to the target terminal in a short range communication way and then transmitted to the server by the target terminal via a switching request message, or it can be acquired by the server from stored information according to a terminal ID and a service ID.

The terminal information of the target terminal is transmitted to the server through the generated service switching request.

Further, switching information required for the service switching further includes service security authentication information, and the security authentication information of the current terminal can be acquired conveniently by the target terminal through a short range communication technique. If a uniform security authentication method is used when an operator provides a user with a wireless cellular network service and WiFi network, the user name and password can be transmitted to the target terminal through short range communication so that the target terminal can establish safe and reliable communication with the server. The current terminal has completed corresponding security authentication when establishing services, thus the security authentication is not implemented any more when the target terminal implements service switching, thereby simplifying the process.

Further, the switching information required for the service switching further includes service data link information between the current terminal and the target terminal. In order to meet multi-terminal service cooperation, service data links may be required to be established in some cases to implement data sharing or forwarding. The service cooperation refers to the fact that the server and two terminals perform division of functions and cooperate to implement services, including service provision ways such as multi-screen displaying, content sharing and forwarding. For example, a video on a mobile phone or tablet computer can be shared by a TV through WiFi or Bluetooth and displayed on the screen of the TV, thus improving user experiences.

Different from existing switching techniques, in the present disclosure, the above information of the current terminal/target terminal is passed to the server not by respective transport networks, instead it can firstly be transmitted to the target terminal through short range communication so that technical advantages of short range communication such as quick and safe can be utilized to the most extent, thereby facilitating pooling and reporting of the switching information required for the service switching. Certainly, the server can also acquire the switching information from information stored therein.

The beneficial effects of using the embodiment lie in: the target terminal is used to initiate a service switching request to the server, and to pool and report the switching information required for the service switching, and the server controls the switching; since before the switching, the current terminal has already passed its terminal capability information to the target terminal, the switching information required for the service switching can be delivered to the server through a switching request, thus the switching process is simplified, it is possible to avoid interference of the switching on the current terminal, and it is ensured that the service is not interrupted during service switching, guaranteeing continuity of the service.

It should be noted that the determination criterion set on the server in advance includes an overall weighing of the terminal capability information, the security authentication information and the service data link information, and the determination criterion can be set by a service operator. Then the switching strategy is determined according to above criteria.

Specifically, determination of the service switching strategy by the server includes but is not limited to the following content.
1. Identification or service authentication is performed according to the service security authentication information reported by the terminal, the service switching can be implemented only after the identification and authentication are passed.
2. It is determined according to reported terminal capability information whether requirements on capability of service switching for the terminal are met; for example, when the target terminal meets requirements on hardware/software for the service and resources of the screen are not occupied, it is considered that switching conditions are met.
3. It is determined, according to the service data link information between the current terminal and the target terminal, whether multi-terminal service collaboration is supported. The multi-terminal service collaboration not only requires passing of the service switching request but also requires, after the switching, service forwarding and cooperation, thus corresponding transmission bandwidth and encoding and decoding functions are required.

After determining that the above switching strategy is met and the service switching can be implemented, the server notifies the target terminal to implement the service switching. After finishing the switching, the target terminal informs the server that the target terminal switches successfully.

After knowing that the target terminal switches successfully, the server notifies the current terminal to perform service switching or service releasing.

If the current terminal does not completely exit services, corresponding service switching is performed. after the switching, the current terminal cooperates with the target terminal; otherwise, service releasing is performed.

In the embodiment of the disclosure, the service continues running on the current terminal during the switching. Throughout the switching, the current terminal only transmits the necessary switching information required for the service switching, and only after the target terminal finishes the switching, the current terminal is notified to perform service switching or service releasing, therefore the service is not interrupted during the service switching, thereby ensuring effectively continuity of the service during the service switching.

A service switching system according to the embodiment of the disclosure includes a server and at least two terminal devices, wherein the terminal devices comprise a current terminal for implementing services and a target terminal requiring services to be switched thereto.

The server is configured to implement service switching when determining that a service switching strategy is met according to switching information required for the service switching stored in the server or pooled in and reported by a service switching request.

The current terminal is configured to transmit its switching information required for the service switching to the target terminal.

The target terminal is configured to pool its switching information required for the service switching and that acquired from the current terminal and then report pooled switching information to the server through the service switching request.

Further, the service switching request may be initiated by a target terminal to the server, and the switching information may be carried in the service switching request.

The switching information includes at least terminal capability information of the target terminal and/or the current terminal. The switching information further includes at least one of: service security authentication information, service data link information of the current terminal and of the target terminal.

Further, the terminal capability information of the target terminal and/or the current terminal may include at least: description information of software capability of the terminal, description information of hardware capability of the terminal, a current resource utilization condition of the terminal;
the terminal capability information of the current terminal is firstly transmitted to the target terminal through near field communication, and then reported to the server by the target terminal via the service switching request; or the terminal capability information of the current terminal is acquired by the server from information stored in the server according to a terminal ID and a service ID.

Further, the server may be further configured to, when it is determined according to the terminal capability information of the target terminal and/or the current terminal that requirements on capability of service switching for the terminal are met, notify the target terminal to perform the service switching; or
the server may be further configured to, when identification and service authentication performed based on the service security authentication information are passed, notify the target terminal to implement the service switching; or
the server may be further configured to, when it is determined according to the service data link information between the current terminal and the target terminal that multi-terminal service collaboration is supported, notify the target terminal to implement the service switching.

The server for controlling service switching according to the embodiment of the disclosure is configured to implement service switching when determining that a service switching strategy is met according to switching information required for the service switching stored in the server or pooled in and reported by a service switching request.

In an embodiment, the service switching request may be initiated by a target terminal to the server, and the switching information may be carried in the service switching request.

The switching information includes at least terminal capability information of the target terminal and/or a current terminal, and it further comprises at least one of service security authentication information, and service data link information between the current terminal and the target terminal.

Further, the server may be further configured to, when it is determined according to the terminal capability information of the target terminal and/or the current terminal that requirements on capability of service switching for the terminal are met, notify the target terminal to perform the service switching; or
the server may be further configured to, when identification and service authentication performed based on the service security authentication information are passed, notify the target terminal to implement the service switching; or
the server may be further configured to, when it is determined according to the service data link information between the current terminal and the target terminal that multi-terminal service collaboration is supported, notify the target terminal to implement the service switching.

Further, the server may be further configured to, after the target terminal completes the service switching, notify the current terminal to perform service switching or service releasing.

Further, the server may be further configured to: when the current terminal doesn't completely exit all of its operating services, switch services required to be switched to the target terminal for operation, and control the target terminal and the current terminal to operate cooperatively all services; when the current terminal exits all of its operating services, control the current terminal to release all of the operating services and to switch released services to the target terminal for operation.

The disclosure will be elaborated below through examples.

Application example 1: both the current terminal and the target terminal support NFC functionality, a service is desired to be switched from the current terminal to the target terminal, necessary switching information required for the service switching is passed through NFC, below content is included.
1. Launching of the service switching functionality of the current terminal can be performed through a menu displayed on a screen or performed through a physical key.
2. An NFC sensing area of the current terminal is approached to an NFC sensing area of the target terminal. The terminal is required to support NFC functionality and to be in an operation state. If the NFC functionality of the terminal is in an off state, the terminal enables the NFC functionality.
   Herein, fast identification of the current terminal and the target terminal can be implemented through NFC at 13.56MHz between the two terminals, thus it is possible to avoid a conventional cumbersome process that available target terminals to be switched are listed in a related program menu for users to select.
3. The current terminal transmits necessary switching information required for the service switching to the target terminal.
   The necessary switching information required for the service switching includes terminal capability information and service security authentication information.

The terminal capability information includes: description information of software capability of the terminal, description information of hardware capability of the terminal, a current resource utilization condition of the terminal and morphological information of a communication link.

The terminal capability information of the current terminal is passed through NFC to the target terminal and then transmitted by the target terminal to the server through the service switching request.

The security authentication information for the target terminal to access the server through a communication link 2 is transmitted through an NFC safe interface. If a uniform security authentication method is used when an operator provides a user with a wireless cellular network service and WiFi network, the user name and password can be transmitted to the target terminal (e.g a TV) through NFC so that the target terminal can establish safe and reliable communication with the server. The current terminal has completed corresponding security authentication when establishing services, thus the security authentication is not implemented any more when the target terminal implements service switching, thereby simplifying the process.

The necessary switching information required for the service switching further includes service data link information set for meeting multi-terminal service cooperation. The service cooperation refers to the fact that the server and two terminals perform division of functions and cooperate to implement services, including service provision ways such as multi-screen displaying, content sharing and forwarding.

In order that a video on a mobile phone or tablet computer can be shared by a TV through WiFi or Bluetooth and displayed on the screen of the TV, Bluetooth pairing or WiFi network fast authentication between the current terminal and the target terminal can be implemented through NFC, thereby accelerating the service switching and improving user experiences.

In the application example, with a feature in the NFC technology that communication between two communication entities can be performed only when their NFC sensing areas are made to be within 10 cm from each other, it is directly ensured that a terminal performing NFC with the current terminal where a user is operating his/her service is exactly the target terminal to which the user wants to switch so that the user does not need to search in a terminal list, thereby improving effectively user experiences. In addition, the service switching can be implemented only when the user makes two terminals close enough, thereby improving effectively security of the service switching.

Application example 2: a user is watching, at home, a film FGH produced by a company N using an Android smart phone with a terminal ID of 3314570002. The copyright protection level of the file is "high", thus the film can be only played locally at a server that transmits corresponding video and audio to a mobile phone.

There is provided a key corresponding to service switching functionality on one side of the mobile phone, and when the key is pressed, switching of a currently operating service will be launched automatically.

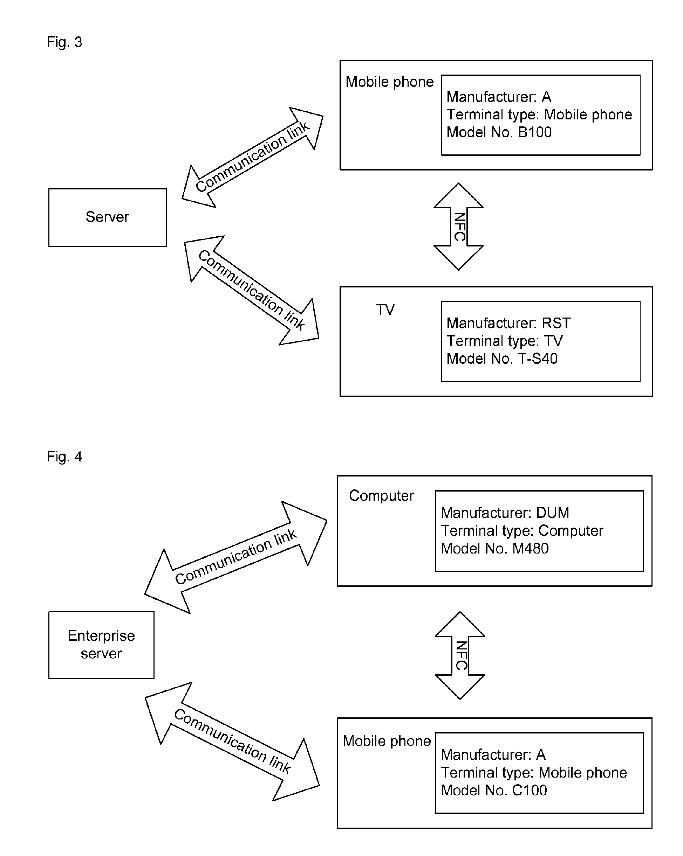

There is also a TV at the user's home, then there are two terminal devices, i.e., the mobile phone and the TV, at the user's home. Both the mobile phone and the TV support NFC, they communicate through NFC, and the architectural diagram is shown in Fig. 3.

The user wants to switch the film from the mobile phone to the TV for watching, and the corresponding switching process includes the following steps:
step 201, a user presses a service switching key on one side of the mobile phone, and approaches an NFC sensing area of the mobile phone to an NFC sensing area of the TV.
Step 202, the mobile phone detects the state of the NFC functionality, and when finding that the NFC functionality is in an off state, then the mobile phone enables the NFC functionality.
Step 203, the mobile phone transmits through NFC to the TV a message 1 containing service description information and current terminal description information.

Herein the service description Information includes the film production company N and the name FGH of the film.

The current terminal description information includes: terminal ID: 3314570002, manufacturer: A, terminal type: mobile phone, model No. B100; terminal capability information: software based on Android 4.0, hardware: Qualcomm MSM8255; current resources: no task, service data link: none.

Step 204, the TV generates, based on information included in the message 1 together with information stored in the TV, a service switching request that requests the server for service switching. When the target terminal does not establish a communication link with the server, the communication link is required to be established.

The service switching request requests the current terminal to switch its service to the target terminal. The service switching information includes the service description information, the current terminal description information and target terminal description information.

The target terminal description information includes: terminal ID: 3314570002, manufacturer: RST, terminal type: TV, model No. T-S40; terminal capability information: software based on Linux, hardware: Intel i5 2.4GHz; current resources: no task, service data link: XXX.

Step 205, the server receives information and requested service type reported by the terminal, then makes a decision on the service switching. When determining that the service can be switched to the target terminal, the server notifies the TV to perform the service switching.

Specifically, when determining according to the reported terminal capability information that the target terminal meets requirements on hardware/software for the service and has no operating tasks occupying resources of the screen, thus switching conditions are met, then the server notifies the TV to perform the service switching.

Step 206, the TV completes the service switching and notifies that server that the service switching is performed successively.

Step 207, the server notifies, after the TV completes the switching, the mobile phone to perform service releasing.

Step 208, the mobile phone completes the service releasing, and the whole service switching process ends.

Application example 3: a user is editing a document Doc 1 that is stored on an enterprise server using an Android smart phone produced by a manufacturer A with a terminal ID of 3314258924.

There is also a computer with the terminal ID of 9377502589 at the user's home. Then at the user's home there are two terminal devices, i.e., the mobile phone and the computer. Both the mobile phone and the computer support NFC, and they communicate through NFC. The architectural diagram is shown in Fig. 4.

After coming back home, the user wants to switch the document to his/her computer at home for editing, and the service switching process includes the following steps:
Step 301, a service switching option in the menu of the mobile phone is clicked, and an NFC sensing area of the mobile phone is approached to an NFC area of the computer.
Step 302, the mobile phone detects the state of the NFC functionality, and when finding that the NFC functionality is in an off state, then the mobile phone enables the NFC functionality.
Step 303, the mobile phone transmits through NFC to the computer a message 1 containing service description information and terminal description information.

Herein the service description information includes: service type: document editing, document name: Doc 1;
the terminal description information includes: terminal ID: 3314258924, manufacturer: A, terminal type: mobile phone, model No. C100, and security authentication information ((user name: WiFi network, password: 1234), (user name: server, password: 5678)); wherein the security authentication information includes a user name and password for logging in to a WiFi network or a user name and password for logging in to a user server.

Step 304, the TV generates, based on information included in the message 1 together with information stored in the TV, a service switching request that requests the server for service switching.

The computer establishes a communication link with the server through a user name and password of the WiFi network.

The service switching request requests the current terminal to switch its service to the target terminal. The service switching request includes the service description information, current terminal description information (terminal ID: 3314258924, manufacturer: A, terminal type: mobile phone, Model No. C100), target terminal description information (terminal ID: 9377502589, manufacturer: DUM, terminal type: computer, model No. M480; and terminal capability information includes: software: Windows 7, hardware: Intel i5 2.4GHz, current resources: no tasks, service data link: none), and the security authentication information, i.e., user name: server, password: 5678. The security authentication information includes a user name and password for logging in to a server.

Step 305, the server determines according to the user name and password that the terminal is valid and passes the service authentication; and the target terminal meets requirements on hardware/software for the service and has no operating tasks occupying resources of the screen, thus the switching conditions are met; the server accepts the service switching request from the target terminal, and notifies the computer to perform the service switching.

Step 306, the computer completes the service switching and notifies the server that the service switching is performed successfully, and the editing service is switched to the computer.

Step 307, the server notifies, after the computer completes the switching, the mobile phone to perform service releasing.

Step 308, the mobile phone completes the service releasing, and the whole service switching process ends.

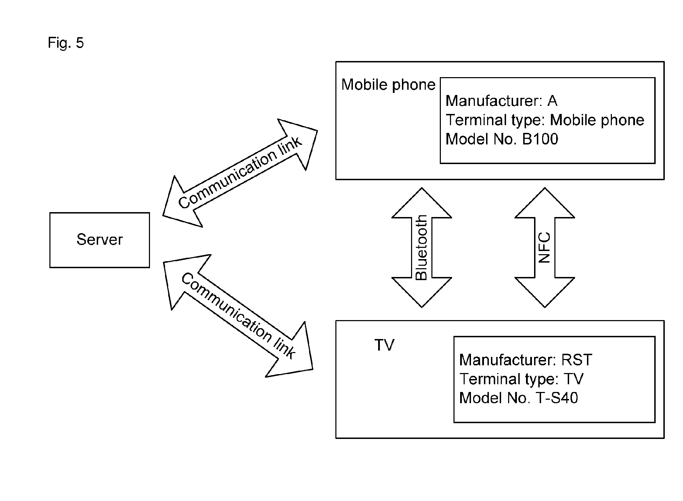

Application example 4: a user is watching, at home, a film FGH produced by a company N using an Android smart phone produced by a manufacturer A with a terminal ID of 3314570002. The film is played locally at a server that transmits corresponding video and audio to a mobile phone. The architectural diagram is shown in Fig. 5.

There is also a TV at the user's home, then there are two terminal devices, i.e., the mobile phone and the TV, at the user's home. In the embodiment of the disclosure, NFC and Bluetooth are used as the short range communication technique, NFC is used to perform fast terminal pairing and to pass the necessary switching information required for the service switching. Bluetooth reports the terminal capability information to the target terminal and the server. After the service switching, Bluetooth is used as the service data link to pass service data and interaction information. Both the mobile phone and the TV support NFC and Bluetooth functionality.

There is provided a key corresponding to service switching functionality on one side of the mobile phone, and when the key is pressed, a option interface is popped up for the user to select a switching mode, in the application example, it is desired that the service on the mobile phone to be switched to the TV while advertisement information corresponding to the TV program continues running on the mobile phone, and the service switching process includes the following steps:
step 401, a user presses a service switching key on one side of the mobile phone, and approaches an NFC sensing area of the mobile phone to an NFC sensing area of the TV.
Step 402, the mobile phone detects the state of the NFC functionality, and when finding that the NFC functionality is in an off state, then the mobile phone enables the NFC functionality.
Step 403, the mobile phone transmits through NFC to the TV a message 1 containing service description information and terminal description information.

Herein the service description Information includes the film production company N and the name FGH of the film.

The terminal description information includes: terminal ID: 3314570002, manufacturer: A, terminal type: mobile phone, model No. B100; terminal capability information: software based on Android 4.0, hardware: Qualcomm MSM8255; current resources: no task, service data link: Bluetooth; two inter-terminal Bluetooth communication links are included in the message as the service data links. It is assumed in the application example that NFC is used to perform Bluebooth pairing.

Step 404, the TV generates, based on information included in the message 1 together with information stored in the TV, a service switching request that requests the server for service switching.

The service switching request requests audio/video services to be switched to the TV while the advertisement information corresponding to the TV program continues running on the mobile phone. The service switching request includes the service description information, current terminal description information (terminal ID: 3314570002, manufacturer: A, terminal type: mobile phone, Model No. B100; terminal capability information: software based on Android 4.0, hardware: Qualcomm MSM8255; current resources: no task, service data link: Bluetooth), and target terminal description information (terminal ID: 3314570002, manufacturer: RST, terminal type: TV, model No. T-S40; and the terminal capability information includes: software: linux, hardware: Intel i5 2.4GHz, current resources: no tasks, service data link: Bluetooth).

Step 405, the server receives information and requested service type reported by the terminal, then makes a decision on the service switching.

The server determines, according to the service data link (Bluetooth) of the current terminal/target terminal, that multi-terminal service collaboration can be supported. In the meantime, the target terminal meets requirements on software/hardware for audio/video services, the current terminal meets requirements for advertisement services, and both of them have no operating tasks occupying resources of the screen, thus the switching conditions are met.

The service can be switched to the target terminal, it is determined according to the Bluetooth pairing information that multi-terminal cooperation is performed, i.e., the TV performs audio/video playing and the mobile phone performs interaction services such as advertisement information that is forwarded by the TV through a Bluetooth interface.

The server notifies the TV to perform service switching.

Step 406, after receiving the service switching request, the TV performs service switching, and notifies the server after the switching succeeds.

Step 407, the server notifies, after knowing that the TV performs the switching successfully, the mobile phone to perform service releasing.

Step 408, the mobile phone enables its service interface to receive an advertisement service transmitted by the TV through the service interface (Bluetooth) and releases its link with the server.

Then the whole service switching ends. The TV outputs the audio/video, and the mobile phone performs the advertisement service. Service interaction information or data (such as synchronization information of two parts' content) between the mobile phone and the TV are transmitted through the service interface (Bluetooth) therebetween, thus ensuing services are performed cooperatively by the two terminals.

It should be noted that in order to emphasize technical effects of the embodiments of the disclosure, NFC is taken as an example to explain the disclosure, but other short range communication techniques can also be taken in the embodiments of the disclosure.

What described are merely preferable embodiments of the disclosure, and are not intended to limit the disclosure.

### INDUSTRIAL APPLICABILITY

In the method according to the embodiments of the disclosure, service switching is implemented when a server determines that a service switching strategy is met according to switching information required for the service switching stored in the server or pooled in and reported by a service switching request. Since information of the current terminal and the target terminal can be pooled using the service switching request so that the target terminal reports pooled switching information required for the service switching to the server for processing, it is possible to implement in-time transmission of the necessary information required for the service switching, furthermore, the service switching is implemented when the server determines that the service switching strategy is met, services operating on the current terminal will not be affected when the switching is not finished, after the switching is finished, the services are switched to the target terminal for operation or operated cooperatively by the target terminal and the current terminal, thus ensuring continuity of the services.

## Claims

1. A service switching method, comprising: implementing service switching when a server determines that a service switching strategy is met according to switching information required for the service switching stored in the server or pooled in and reported by a service switching request.

2. The method according to claim 1, wherein the service switching request is initiated by a target terminal to the server, and the switching information is carried in the service switching request;
the switching information comprises at least terminal capability information of the target terminal and/or a current terminal, and it further comprises at least one of service security authentication information, and service data link information between the current terminal and the target terminal.

3. The method according to claim 2, wherein the terminal capability information of the target terminal and/or the current terminal comprises at least: description information of software capability of the terminal, description information of hardware capability of the terminal, a current resource utilization condition of the terminal;
the terminal capability information of the current terminal is firstly transmitted to the target terminal through near field communication, and then reported to the server by the target terminal via the service switching request; or the terminal capability information of the current terminal is acquired by the server from information stored in the server according to a terminal ID and a service ID.

4. The method according to claim 2, wherein the implementing service switching when a server determines that a service switching strategy is met comprises:
when it is determined, according to the terminal capability information of the target terminal and/or the current terminal, that requirements on capability of service switching for the terminal are met, notifying, by the server, the target terminal to perform the service switching; or
when identification and service authentication performed based on the service security authentication information are passed, notifying, by the server, the target terminal to implement the service switching; or
when it is determined, according to the service data link information between the current terminal and the target terminal, that multi-terminal service collaboration is supported, notifying, by the server, the target terminal to implement the service switching.

5. The method according to any one of claims 1 to 4, further comprising:
running the service on the current terminal during implementation of the service switching; and
after the target terminal completes the service switching, notifying, by the server, the current terminal to perform service switching or service releasing.

6. The method according to claim 5, wherein the notifying by the server the current terminal to perform service switching or service releasing comprises:
if the current terminal doesn't completely exit all of its operating services, switching services required to be switched to the target terminal for operation, and operating cooperatively by the target terminal and the current terminal all services;
if the current terminal exits all of its operating services, releasing all of the services operating on the current terminal and switching released services to the target terminal for operation.

7. A service switching system, comprising a server and at least two terminal devices, wherein the terminal devices comprise a current terminal for implementing services and a target terminal requiring services to be switched thereto;
the server is configured to implement service switching when determining that a service switching strategy is met according to switching information required for the service switching stored in the server or pooled in and reported by a service switching request;
the current terminal is configured to transmit its switching information required for the service switching to the target terminal; and
the target terminal is configured to pool its switching information required for the service switching and that acquired from the current terminal and then report pooled switching information to the server through the service switching request.

8. The system according to claim 7, wherein the service switching request is initiated by the target terminal to the server, and the switching information is carried in the service switching request;
the switching information comprises at least terminal capability information of the target terminal and/or a current terminal, and it further comprises at least one of service security authentication information, and service data link information between the current terminal and the target terminal.

9. The system according to claim 8, wherein the terminal capability information of the target terminal and/or the current terminal comprises at least: description information of software capability of the terminal, description information of hardware capability of the terminal, a current resource utilization condition of the terminal;
the terminal capability information of the current terminal is firstly transmitted to the target terminal through near field communication, and then reported to the server by the target terminal via the service switching request; or the terminal capability information of the current terminal is acquired by the server from information stored in the server according to a terminal ID and a service ID.

10. The system according to 8, wherein the server is further configured to, when it is determined according to the terminal capability information of the target terminal and/or the current terminal that requirements on capability of service switching for the terminal are met, notify the target terminal to perform the service switching; or
the server is further configured to, when identification and service authentication performed based on the service security authentication information are passed, notify the target terminal to implement the service switching; or
the server is further configured to, when it is determined according to the service data link information between the current terminal and the target terminal that multi-terminal service collaboration is supported, notify the target terminal to implement the service switching.

11. A server for controlling service switching, the server being configured to implement service switching when determining that a service switching strategy is met according to switching information required for the service switching stored in the server or pooled in and reported by a service switching request.

12. The server according to claim 11, wherein the service switching request is initiated by a target terminal to the server, and the switching information is carried in the service switching request;
the switching information comprises at least terminal capability information of the target terminal and/or a current terminal, and it further comprises at least one of service security authentication information, and service data link information between the current terminal and the target terminal.

13. The server according to 12, the server being further configured to, when it is determined according to the terminal capability information of the target terminal and/or the current terminal that requirements on capability of service switching for the terminal are met, notify the target terminal to perform the service switching; or
the server being further configured to, when identification and service authentication performed based on the service security authentication information are passed, notify the target terminal to implement the service switching; or
the server being further configured to, when it is determined according to the service data link information between the current terminal and the target terminal that multi-terminal service collaboration is supported, notify the target terminal to implement the service switching.

14. The server according to any one of claims 11 to 13, the server being further configured to, after the target terminal completes the service switching, notify the current terminal to perform service switching or service releasing.

15. The server according to claim 14, the server being further configured to: when the current terminal doesn't completely exit all of its operating services, switch services required to be switched to the target terminal for operation, and control the target terminal and the current terminal to operate cooperatively all services; when the current terminal exits all of its operating services, control the current terminal to release all of the operating services and to switch released services to the target terminal for operation.
